# EUROPÄISCHE PATENTSCHRIFT

(11) **EP 2 578 121 B1**
(45) Veröffentlichungstag und Bekanntmachung des Hinweises auf die Patenterteilung: **23.08.2017**
(21) Anmeldenummer: 12187303.8
(22) Anmeldetag: 04.10.2012
(51) Int. Cl.: A47J 31/40, A47J 31/42

(54) **Kaffeeautomat und Verfahren zum Betreiben eines Kaffeeautomaten**
Coffee machine and method for operating a coffee machine
Machine à café et procédé destiné au fonctionnement d'une machine à café

(30) Priorität: 04.10.2011 DE 102011054157
(43) Veröffentlichungstag der Anmeldung: 10.04.2013
(73) Patentinhaber: Eugster/Frismag AG, 8580 Amriswil (CH)
(72) Erfinder: Riessbeck, Wolfgang, 8597 Landschlacht (CH); Schmied, Michael, 9052 Niederteufen (CH)
(74) Vertreter: Behrmann, Niels

(56) Entgegenhaltungen:
- EP-A1- 0 424 326
- EP-A1- 0 605 750
- EP-A2- 0 245 197
- WO-A1-2008/105017
- DE-U1- 29 508 248

## Beschreibung

Die vorliegende Erfindung betrifft einen Kaffeeautomaten nach dem Oberbegriff des Hauptanspruchs. Ferner betrifft die vorliegende Erfindung ein Verfahren zum Betreiben eines Kaffeeautomaten, insbesondere eines Kaffeeautomaten nach dem Oberbegriff des Hauptanspruchs.

Derartige gattungsbildende Kaffeeautomaten, nachfolgend auch als Kaffee-Vollautomaten bezeichnet, sind aus dem Stand der Technik allgemein bekannt und setzen in Bohnenbehältern enthaltene Kaffeebohnen nach Mahl- und Brühschritten durch entsprechend zugeordnete Funktionseinheiten in ein trinkfähiges Kaffeegetränk um. Dabei erfolgt, typischerweise als Reaktion auf eine Auswahl aus einer Mehrzahl von möglichen Kaffeebohnensorten (einer entsprechend zugeordneten Mehrzahl von Bohnenbehältern) die weitere Verarbeitung bis zum trinkfähigen Heißgetränk automatisch, ohne dass eine Bedienperson in diesen Ablauf eingreifen muss.

Die Qualität des trinkbereiten, mit einer solchen Vorrichtung erzeugten Produkts wird dabei von verschiedenen Faktoren bestimmt; neben der verwendeten Bohnensorte (bzw. deren Parameter, wie etwa Frische, Feuchtigkeitsgehalt oder dergleichen der Bohnen) sind auch die nachfolgenden Verarbeitungsschritte wie Mahlen und Brühen für den Geschmacks- und damit Qualitätseindruck des mit dem gattungsgemäßen Kaffeeautomaten bereiteten Getränks ursächlich.

So bestimmt etwa die Menge von in das Mahlwerk einer Mahleinheit eingebrachten Kaffeebohnen diesen Geschmackseindruck, entsprechend damit die aus dieser Bohnenmenge (Bohnen-Eintragungsmenge) gewonnenen Kaffeemehls.

Das Dosieren einer entsprechend benötigten Kaffeebohnenmenge gemäß der gattungsgemäßen Dosiermittel ist damit ein kritischer, geeignet apparativ einzurichtender Prozess im Rahmen eines solchen gattungsbildenden Kaffeeautomaten.

Allerdings wird eine für einen gleichbleibenden Qualitäts- und Geschmackseindruck notwendige Konstanz häufig dadurch erschwert, dass, je nach Bohnensorte, Feuchtigkeitsgehalt oder Bohnengröße einer zu dosierenden Kaffeebohnenmenge oder dergleichen Faktoren, eine effektive, nachfolgend zu verbrühende Menge Kaffeemehls Schwankungen unterworfen ist. Dabei sind diese Schwankungen einerseits sortenbedingt (wobei etwa Kaffeebohnen einer größeren durchschnittlichen Bohnengröße entsprechend größere Zwischenräume in der Bohnenschüttung mit sich bringen und entsprechend eine vom Bohnenvolumen abhängige Dosierung weniger Kaffeemehl erbringt) oder betriebs- und umgebungsbedingt (wobei etwa eine erhöhte Feuchtigkeit der Bohnen sich anders auf eine resultierende Kaffeemehlmenge auswirkt, als etwa entsprechend trockenere Bohnen).

Das Ergebnis ist damit ein häufig inhomogenes und im Qualitätseindruck schwankendes Kaffeeprodukt, mit nur begrenzten herkömmlichen Eingriffsmöglichkeiten durch einen Nutzer bzw. Konsumenten: So würde typischerweise durch ansonsten bekannte, manuell betätigbare Einstellmöglichkeiten zum Verstärken oder Abschwächen eines Geschmackseindrucks die Bedienperson entsprechend reagieren können (wobei dann durch manuelle Steuerung, typischerweise eine Laufzeit eines Mahlwerks beeinflussend, eine Kaffeemehlmenge entsprechend eingestellt werden kann, ergänzend oder alternativ ein Grad der Vermahlung, also eine Feinheit des erzeugten Mehls).

Eine derartige Vorgehensweise ist jedoch gerade unter Gesichtspunkten eines Gastronomiebetriebes mit entsprechend hoher Bereitungsfrequenz unzureichend und damit im Ergebnis unbefriedigend. Aus der WO 2008/105017 A1 ist ein Kaffeeautomat nach dem Oberbegriff des Hauptanspruchs bekannt, ferner offenbart diese Druckschrift Dosiermittel zum Eintragen einer veränderlichen Bohneneintragungsmenge in die Mahleinheit als Reaktion auf das Über- bzw. Unterschreiten eines Stromsignals als Sicherheits-Stromsignal.

Auch offenbart die DE-U-295 08 248 die oberbegriffliche Lehre, ferner Steuermittel, welche zum Vergleichen des Erfassungssignals aus einer ersten, durch die Dosiermittel dosierten Bohneneintragungsmenge mit einem Vorgabesignal sowie zum Erzeugen des Dosiersteuersignals für eine nachfolgend zu dosierende zweite Bohneneintragungsmenge als Reaktion auf das Vergleichen ausgebildet sind. Aufgabe der vorliegenden Erfindung ist es daher, einen gattungsgemäßen Kaffeeautomaten so zu verbessern, dass, bezogen auf eine Sorte an Kaffeebohnen (bzw. eine Mehrzahl von Kaffeebohnensorten) ein gleichbleibender Geschmackseindruck und damit Qualitätseindruck realisiert werden kann.

Die Aufgabe wird durch den Kaffeeautomaten mit den Merkmalen des Hauptanspruchs gelöst. Vorteilhafte Weiterbildungen der Erfindung sind in den Unteransprüchen beschrieben. Unabhängiger Schutz im Rahmen der vorliegenden Erfindung wird ferner beansprucht für ein Verfahren zum Betreiben eines Kaffeeautomaten, wobei dieses Verfahren bevorzugt zum Betreiben des Kaffeeautomaten nach dem Hauptanspruch (sowie der darauf rückbezogenen abhängigen Ansprüche) ist, jedoch auch unabhängig davon Schutz entfaltet.

In erfindungsgemäß vorteilhafter Weise setzt die Erfindung zunächst die Erkenntnis um, dass Grundlage für den gewünschten gleichbleibenden Qualitätseindruck eine konstante Menge Kaffeemehls ist, welche, ausgangsseitig der Mahleinheit, durch die Brüheinheit zum Herstellen des trinkfertigen Getränks zu verbrühen ist.

In erfindungsgemäß vorteilhafter Weise wird dies zunächst dadurch gelöst, dass ausgangsseitig der Mahleinheit Mittel zum Erfassen eines Mengenparameters der gemahlenen Bohnen (also des Kaffeemehls) vorgesehen sind.

Typischerweise handelt es sich dabei um Mittel zum Erfassen eines Kaffeemehlvolumens. Diese Erfassungsmittel erzeugen aus dem Erfassungsergebnis (also aus einem erfassten Mehlvolumen) das erfindungsgemäße Erfassungssignal, welches über die erfindungsgemä-ßen Steuermittel so zu den erfindungsgemäßen Dosiermitteln geschleift (rückgekoppelt) ist, dass das mengenmäßige Ergebnis eines (vorhergehenden) Mahlvorgangs, verglichen mit einem Vergleichswert (als geeignetem, gewünschtem Sollwert für das benötigte Mehlvolumen), Grundlage für eine nachfolgend zu vermahlende Menge an Kaffeebohnen ("Bohnen-Eintragungsmenge = Bohnen-Dosiervolumen") ist. Dabei bildet sich im Optimalfall ein Regelsystem heraus, welches über aufeinanderfolgende Chargen zu einer dem Sollwert entsprechenden konstanten Menge an Kaffeemehl ausgangsseitig der Mahleinheit führt, selbst wenn sich die Kaffeebohnensorte oder andere Bedingungen ändern.

Dabei ist es im Rahmen der Erfindung vorgesehen, dass als Reaktion auf das Dosiersteuersignal (welches aus dem Vergleich des Erfassungssignals mit dem Vorgabesignal erzeugt wird) die veränderbare Bohnen-Eintragungsmenge erzeugt wird, wobei diese Dosierung, wie im Rahmen der Erfindung vorgesehen und nachfolgend beschrieben, durch vorbestimmte Bohnenmengen in einer geeignet zu beeinflussenden Dosierkammer erfolgt.

Dabei ist im Rahmen bevorzugter Ausführungsbeispiele der Erfindung das Vorgabesignal nicht notwendigerweise konstant (auch wenn dies, etwa bei einer typischen und gebräuchlichen Voreinstellung, ein sinnvolles Ausführungsbeispiel darstellen kann), vielmehr kann, beispielsweise durch manuellen Eingriff durch einen Benutzer, einen Programmier- oder Lernalgorithmus oder dergleichen, sich das erfindungsgemäße Vorgabesignal auch anpassen. Auch kann das erfindungsgemäße Vorgabesignal genutzt werden, um damit etwa gezielt (gestuft) die zu erzielende Kaffeemehlmenge auf einen gewünschten Pegel einzustellen, woraufhin dann wieder die vorliegende Erfindung (sofern dann dieser Wert konstant bleibt) in nachfolgenden Chargen diese gewählte Kaffeemehlmenge praktisch unverändert hält.

Im Rahmen des erfindungsgemäßen Regelungssystems lassen sich nicht sämtliche Schwankungen ausschließen, so dass, in der Art einer vorgegebenen Toleranz, die erfindungsgemäße Regelung auf einen vorbestimmten Bereich des konstanten Mengenparameters (also z.B. des Kaffeebohnenmehls) erfolgt.

Für die praktische Umsetzung besonders bedeutsam und sinnvoll ist es, das erfindungsgemäße Erfassen des Kaffeemehls innerhalb des üblicherweise ohnehin schon vorhandenen apparativen Kontexts durchzuführen. So ist es weiterbildungsgemäß im Rahmen der Erfindung vorgesehen und bevorzugt, das erfindungsgemäß zu detektierende Kaffeemehlvolumen als Mengenparameter dadurch zu detektieren, dass ausgangsseitig der Mahleinheit das Mehl einer Bohnen-Eintragungsmenge von einem Erfassungsbehälter aufgefangen wird, dessen Behälterquerschnitt bekannt ist. Dementsprechend führt dann eine Detektion des Kaffeemehl-Füllstands in diesem Erfassungsbehälter unmittelbar zum gewünschten Volumen-Detektionsergebnis, wobei eine derartige Menge-Füllstandshöhe z.B. in ansonsten bekannter Weise durch mechanische Mittel wie etwa einem Hebel, einen an einem Arm befestigten Mitnehmer oder dergleichen mechanisch wirksame Aggregate realisiert sein kann, ebenso wie alternativ (oder ergänzend) in Form von optischen Mitteln, wie etwa einer Lichtschranken- oder Laseranordnung.

Besonders bevorzugt ist es zudem, als Erfassungsbehälter einen ohnehin vorhandenen Einlassbereich der nachgeschalteten Brüheinheit zu verwenden: Vor dem Verbrühen des Kaffeemehls gelangt dieses auch schon in herkömmlich bekannter Weise in diesen Einlassbereich, sammelt sich auf einem Filterabschnitt und kann dann zum Ermitteln des Kaffeevolumens geeignet in der jeweiligen Füllhöhe abgetastet werden.

Wie vorstehend erwähnt, ist es im Rahmen der Erfindung vorgesehen, die durch das erfindungsgemäße Dosiersteuersignal ansteuerbaren Dosiermittel mit jeweils einer Dosierkammer zu versehen, in welche, entsprechend einer jeweils beabsichtigten Bohnen-Eintragungsmenge, lediglich so viele Kaffeebohnen aus dem (mindestens einen) Bohnenbehälter eingetragen werden, wie nachfolgend zu dieser Charge zu vermahlen und dann zu verbrühen sind. Erfindungsgemäß vorteilhaft wird dann die Bohnen-Eintragungsmenge in die Dosierkammer verändert, indem entweder die Dosierkammer (bei konstantem Kammervolumen) durch eine anzutreibende Bewegung (etwa translatorisch oder rotatorisch) relativ zu einem Einlass (mit Bohnen aus dem Bohnenbehälter) ortsveränderlich bewegt wird; ergänzend etwa durch geeignetes Bewegen von volumenrelevanten Teilen der Dosierkammer, etwa einer Dosierkammerwand, die Menge der einzutragenden Bohnen eingerichtet wird, wiederum ergänzend, etwa unter Einbezug einer Zeitdimension, durch geeignetes Ansteuern von zufluss- und/oder abflussseitigen Verschlussmitteln einer solchen Dosierkammer die erfindungsgemäße Bestimmung und Beeinflussung der Bohnen-Eintragungsmenge erfolgen kann.

Im Ergebnis ermöglicht es die vorliegende Erfindung in überraschend einfacher und eleganter Weise, dass unabhängig von Bedingungen, die durch die Kaffeebohnen im Bohnenbehälter sowie weitere Umgebungsbedingungen, wie Feuchtigkeit, vorgegeben sind, eine stets nahezu gleichbleibende Kaffeemehlmenge am Ausgang der Mahleinheit erzielt wird, zumindest betreffend eine jeweils nachfolgende Charge (da, gemäß der vorliegenden Erfindung, das Ergebnis des vorangehenden Bohneneintragens sowie nachfolgenden Vermahlens auf der Basis der erreichten Kaffeemehlmenge gemessen und im Vergleich mit dem Vorgabesignal berücksichtigt wird).

Ergebnis ist eine hohe Konstanz in der Qualität des erzeugten Kaffeeprodukts, mithin eine deutliche Qualitätsverbesserung des erfindungsgemä-ßen Kaffeeautomaten, wodurch sich die vorliegende Erfindung insbesondere für Vorrichtungen mit großem Kaffeedurchsatz und/oder stark variablen Bedingungen eignet, jedoch nicht auf diese Bedingungen beschränkt ist.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein schematisches Blockschaltbild zum Verdeutlichen wesentlicher Funktionskomponenten sowie deren Zusammenwirken eines Kaffeeautomaten gemäß einem ersten, bevorzugten Ausführungsbeispiel der vorliegenden Erfindung und
- Fig. 2:: ein schematisches Blockschaltbild eines Kaffeeautomaten gemäß einem zweiten Ausführungsbeispiel mit einer vorgesehenen Mehrzahl von Bohnenbehältern.

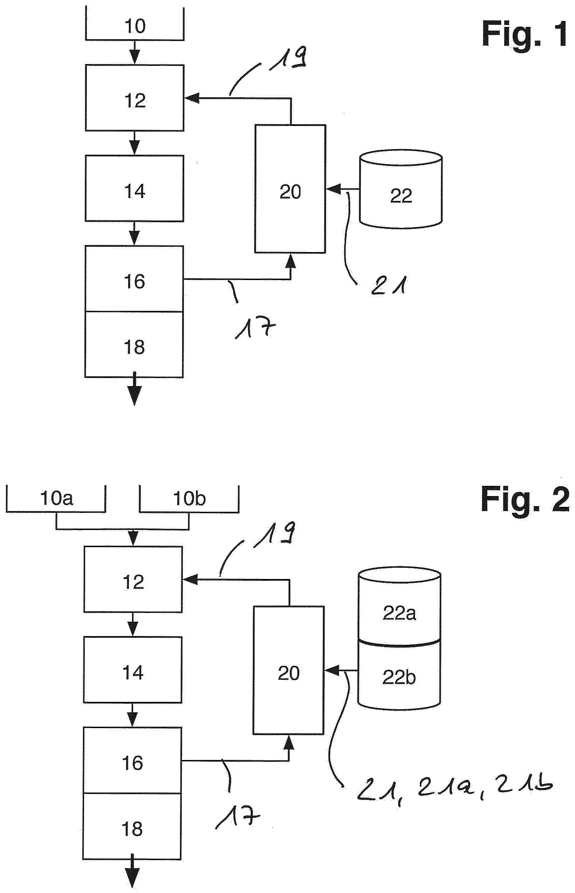

Die Fig. 1 zeigt schematisch die Funktionskomponenten des erfindungsgemäßen Kaffeeautomaten eines ersten Ausführungsbeispiels der vorliegenden Erfindung. Es handelt sich dabei um einen sogenannten Kaffee-Vollautomaten, bei welchem Kaffeebohnen, welche in einem Bohnenbehälter 10 der Maschine bereitgestellt sind, geeignet über Dosiermittel 12 dosiert in eine Mahleinheit 14 eingetragen werden. Diese vermahlt eine Charge der Bohnen in Kaffeemehl, woraufhin dann dieses Kaffeemehl in einer Brüheinheit 18 zum Herstellen des trinkfertigen Heißgetränks verbrüht wird. In ansonsten bekannter Weise werden sämtliche Funktionen, eingeschlossen Vorwahlmöglichkeiten, Parametrisierungen und anderes durch eine nicht gezeigte Ablaufsteuerungseinheit realisiert. Ebenso sind die gezeigten Funktionskomponenten in einem (nicht gezeigten) Gehäuse enthalten, welches zudem weitere Aggregate, wie etwa Heizung, Wasserzufuhr, Stromversorgungen oder dergleichen in ansonsten bekannter Weise enthält.

Das Ausführungsbeispiel der Fig. 1 sieht erfindungsgemäß vorteilhaft vor, dass die dem (einzigen) Bohnenbehälter 10 nachgeschalteten Dosiermittel 12 ausgebildet sind, eine einstellbare und/oder konstante Bohnenmenge aus dem Bohnenbehälter 10 zu fördern und der nachgeschalteten Mahleinheit 12 zuzuleiten. Weiterbildungsgemäß vorteilhaft sind bei dieser Ausführungsform der Erfindung die Dosiermittel mittels einer (in den Figuren nicht gezeigten) Dosierkammer realisiert, welche relativ zu einem (nicht gezeigten) Auslass des Bohnenbehälters positioniert wird, mit dem Zweck, eine einzutragende Bohnenmenge in die Dosiermittel einzustellen und vorzubestimmen. Ergänzend oder alternativ kann eine Dosierkammer der Dosiermittel durch eine verschiebbare Wand oder dergleichen Aggregat in einem Füllvolumen als Grundlage für die zu dosierende Charge eingestellt werden, ergänzend kann durch geeignete Steuerung, etwa eines geeignet zu öffnenden bzw. abzusperrenden Zufluss in einer solchen Dosierkammer, eine entsprechende Charge bestimmt (eingestellt) werden.

Beim beschriebenen Ausführungsbeispiel sind die Dosiermittel so eingerichtet, dass diese die darin dosierte Charge an Kaffeebohnen zur Mahleinheit 14 entleeren, so dass diese Mahleinheit 14 ausgangsseitig dann eine der eindosierten Bohnencharge entsprechende Mehlmenge auslässt.

Die vorliegende Erfindung sieht nunmehr vor, dass dieses Kaffeemehl, im beschriebenen Ausführungsbeispiel ein Volumen dieses konkret aus der Kaffebohnencharge erzeugten Kaffeemehls, durch Erfassungsmittel 16 erfasst wird, welche der Mahleinheit 14 nachgeschaltet sind. Im beschriebenen Ausführungsbeispiel sind diese Erfassungsmittel 16 in einem Einlass- bzw. Eingangsbereich der Brüheinheit 18 so vorgesehen, dass durch ein für das Verbrühen benötigtes Sieb der Brüheinheit 18 ein Boden für einen in dem Eingangsbereich gebildeten Erfassungsbehälter für das Kaffeemehl gebildet wird. In diesem Erfassungsbehälter ist dann entsprechend einer jeweiligen Füllhöhe des eingetragenen Kaffeemehls ein Abtasthebel bzw. Abtastarm bewegbar, an welchem wiederum, über geeignete Sensorik, ein höhenproportionales Erfassungssignal 17 abgegriffen und zur Weiterleitung an eine Steuereinheit 20 aufbereitet wird. Durch den Umstand, dass durch die Boden- und Wandgeometrie des im Eingangsbereich der Brüheinheit 18 gebildeten Erfassungsbehälters mit einer jeweiligen Füllhöhe ein volumenproportionales Signal erzeugt werden kann, besteht damit mit dem Erfassungssignal 17 die Möglichkeit, die tatsächlich aus den Dosiermitteln 12 heraus zur Mahleinheit dosierte Bohnenmenge einer resultierenden Mehlmenge gegenüberzustellen, wobei, wie eingangs dargelegt, verschiedene interne und externe Randbedingungen dafür verantwortlich sein können, dass nicht stets ein Bohnen-Dosiervolumen zu einer konstanten Mehlmenge führt.

Im Ausführungsbeispiel der Fig. 1 findet nunmehr in der (geeignet durch eine programmierte Mikorkontrollereinheit oder dergleichen realisierten) Steuereinheit 20 ein Vergleich statt, nämlich des elektronisch aufbereiteten, digitalisierten Erfassungssignals 17, mit einem aus einer Speichereinheit 20 herangeführten Soll- bzw. Vorgabesignal 21. Dieses Soll- bzw. Vorgabesignal entspricht typischerweise einem beabsichtigten Mehlvolumen in den Erfassungsmitteln 16 und basiert auf ursprünglichen Kalibrations-, manuellen oder automatischen Vorgabeschritten, einem Lernbetrieb oder dergleichen ansonsten bekannten Verfahrensschritten zum Herstellen eines derartigen Vorgabesignals.

Die Steuereinheit 20 führt dann einen Signalvergleich der Signale 17 und 21 (ggf. unter Berücksichtigung eines Toleranzbereichs) durch und erzeugt als Ergebnis des Vergleichs ein Dosiersteuersignal 19, welches den Dosierbetrieb der Dosiermittel 12 beeinflusst. Konkret könnte etwa das Erfassungssignal 17 der Erfassungsmittel 16 signalisieren, dass eine erste Bohnencharge für eine erste zu brühende Kaffeeportion eine Mehlmenge erzeugt, die geringer ist als die mittels des Vorgabesignals beabsichtigte Mehlmenge. Zwar würde für diese erste Kaffeemehlcharge nachfolgend der Brühbetrieb durch die Brüheinheit 18 erfolgen, gleichzeitig würde jedoch, für die nachfolgend zu bereitende Kaffeecharge (für das dann zu bereitende Kaffeegetränk) das Dosiersteuersignal entsprechend dem Vergleichergebnis der Steuereinheit 20 angeben, dass die nunmehr von den Dosiermitteln 12 aus dem Bohnenbehälter 10 und in die Mahleinheit 14 hineinzudosierende Bohnenmenge zu erhöhen ist, etwa in proportionaler Weise. Dies führt dann dazu, dass diese zweite Kaffeebohnencharge ein entsprechend erhöhtes Mehlvolumen bewirkt, da in diesem angenommenen Fall zwischen dem Bereiten der ersten und der zweiten Kaffeeportion weder eine Veränderung der Bohnensorte im Bohnenbehälter 10 noch eine Veränderung der Umgebungsbedingungen stattgefunden hat.

Entsprechend würde die resultierende Erhöhung der Mehlmenge, detektiert durch die Erfassungsmittel 16, in der Art einer ansonsten bekannten Regelschleife in einem oder mehreren Schritten zu einem Dosiersteuersignal 19 führen, welches die Bohnen-Eintragungsmenge in die Dosiermittel 12 konstant hält.

Das Ergebnis ist dann für einen angenommenen Dauerbetrieb, bei welchem kontinuierlich Chargen der Kaffeebohnen vermahlen und dann zu Kaffeeportionen gebrüht werden, eine gleichbleibende Qualität. Werden jedoch nunmehr, etwa durch Wahl einer anderen Bohnensorte für den Bohnebehälter, die Bedingungen geändert, wobei etwa diese Bohnensorte durch größervolumige Einzelbohnen, andere Feuchtigkeitseigenschaften oder andere inhärente Parameter eine Änderung in der resultierenden Mehlmenge (Erfassungssignal 17) bringt, würde wiederum durch die Steuereinheit, im Vergleich mit dem Vorgabesignal und dem daraus resultierenden Dosiersignal 19, eine Nachregelung (Justierung) der resultierenden Mehlmenge erfolgen.

Der Benutzer dieser beschriebenen Vorrichtung hätte zudem die Möglichkeit, durch Anpassen des Vorgabesignals, etwa durch stufenweise oder stufenlose manuelle Einstellung oder durch geeignete Programmierung oder andere Maßnahmen zusätzlich einzugreifen, indem etwa ein einer Kaffeesorte entsprechendes Vorgabesignal vorgewählt wird, wiederum alternativ könnte dies auch, durch geeignete (nicht gezeigte) Verbindung mit dem Bohnenbehälter oder einem anderen Vorgabeaggregat automatisch erfolgen.

Dieser Grundgedanke wird auch vom gegenüber dem Ausführungsbeispiel der Fig. 1 leicht modifizierten Ausführungsbeispiel der Fig. 2 aufgegriffen:
Dieses Ausführungsbeispiel unterscheidet sich durch den Umstand, dass zwei Bohnenbehälter 10a, 10b vorgesehen sind, welche typischerweise zum Aufnehmen verschiedener Bohnensorten geeignet sind.

Wiederum würden, in der vorbeschriebenen Weise, die Dosiermittel (geeignet selektiv auf die Behälter 10a bzw. 10b zugreifend), die Mahleinheit 14, die Erfassungsmittel 16 sowie die Brüheinheit 18 arbeiten, wobei, im Hinblick auf eine auszuwählende Kaffeemenge und ein dafür vorgesehenes Vorgabesignal, etwa entsprechend dem gezeigten Index (a) bzw. (b) für die jeweilige Sorte gemäß Behälter (10a, 10b) das nötige Vergleichssignal liefert. Sofern dann kontinuierlich aus einem jeweiligen der Behälter chargenweise Bohnen entnommen werden, findet in der vorgeschriebenen Weise der Regelungsbetrieb zur Vergleichsmäßigung der Kaffeebohnenmenge statt. Im vorbeschriebenen Ausführungsbeispiel kann dann etwa ein Umschalten bzw. Auswählen einer anderen Kaffeesorte (aus einem anderen Behälter) zum Zuordnen eines entsprechend anderen Vorgabesignals des zugehörigen Speichers führen, mit dem Ergebnis, dass auch dann auf diesen Sollwert geeignet eingeregelt werden kann.

Auch für dieses Ausführungsbeispiel gelten die vorbeschriebenen weiteren Möglichkeiten des manuellen, zusätzlichen Eingreifens, Einstellens oder Veränderns des Vorgabesignal oder anderer Parameter.

Im Ergebnis ermöglicht es die vorliegende Erfindung damit in überraschend einfacher und wirksamer Weise, zu möglichem Qualitätsverlust führende Inhomogenitäten einer jeweiligen Kaffeebohnen-Eintragungsmenge in eine Mahleinheit im Hinblick auf eine konstante (bzw. auf ein Vorgabesignal eingeregelte) Bestimmungsgröße für das Mehl, nämlich das Mehlvolumen, zu normieren, so dass, erfindungsgemäß vorteilhaft, zumindest bei einer zweiten oder dritten Charge aus einer Bohnensorte die Voraussetzungen für einen gleichbleibenden Qualitätseindruck des erzeugten Kaffeegetränks geschaffen sind. Damit ist die Verwendung der vorliegenden Erfindung insbesondere für den Gastronomiebereich bevorzugt, jedoch nicht auf diese Verwendung beschränkt.

## Patentansprüche

1. Kaffeeautomat mit
mindestens einem Bohnenbehälter (10; 10a, 10b),
einer zum Mahlen von Bohnen aus dem mindestens einen Bohnenbehälter ausgebildeten Mahleinheit (14), einer der Mahleinheit nachgeschalteten Brüheinheit (18) für gemahlene Bohnen und
Dosiermitteln (12) zum Eintragen von Bohnen aus dem Bohnenbehälter in die Mahleinheit, wobei der Mahleinheit Mittel (16) zum Erfassen eines Mengenparameters der gemahlenen Bohnen in Form eines Mehlvolumens in einem Erfassungsbehälter sowie zum Erzeugen eines Erfassungssignals (17) daraus nachgeschaltet sind,
**dadurch gekennzeichnet, dass**
die mit einer Dosierkammer versehenen Dosiermittel (12) zum Eintragen einer als Reaktion auf ein Dosiersteuersignal (19) veränderbaren Bohneneintragungsmenge in die Mahleinheit ansteuerbar und so ausgebildet sind, dass zum Verändern der Bohneneintragungsmenge die Dosierkammer durch eine anzutreibende Bewegung relativ zu einem Einlass ortsveränderlich bewegt und/oder durch ein Bewegen von volumenrelevanten Teilen der Dosierkammer die Menge der einzutragenden Bohnen eingerichtet wird,
und wobei der Kaffeeautomat Steuermittel (20) aufweist, die zum Vergleichen des Erfassungssignals (17) aus einer ersten, durch die Dosiermittel (12) dosierten Bohneneintragungsmenge mit einem Vorgabesignal (21; 21a, 21b) sowie zum Erzeugen des Dosiersteuersignals (19) für eine nachfolgend zu dosierende zweite Bohneneintragungsmenge als Reaktion auf das Vergleichen ausgebildet sind.

2. Kaffeeautomat nach Anspruch 1, **dadurch gekennzeichnet, dass** die Steuermittel so ausgebildet sind, dass eine Signaldifferenz zwischen dem Erfassungssignal und dem Vorgabesignal eine bevorzugt proportionale Erhöhung oder Minderung der Bohneneintragungsmenge durch die Dosiermittel bewirkt, wodurch insbesondere die Signaldifferenz für die zweite Bohneneintragungsmenge vermindert wird.

3. Kaffeeautomat nach Anspruch 1 oder 2, **dadurch gekennzeichnet, dass** die Steuermittel so ausgebildet sind, dass durch das Erzeugen des veränderlichen Dosiersteuersignals für aufeinander folgende Bohneneintragungsmengen eine Regelung auf einen innerhalb eines vorbestimmten Bereichs konstanten Mengenparameters der gemahlenen Bohnen bewirkt wird.

4. Kaffeeautomat nach einem der Ansprüche 1 bis 3, **dadurch gekennzeichnet, dass** das Vorgabesignal (21; 21a, 21b) als Reaktion auf einen manuellen oder Programmeingriff veränderbar ist, insbesondere aus einer Mehrzahl von gespeicherten, verschiedenen und abgestuften Signalen durch eine manuelle Betätigung von Auswahlmitteln und/oder durch Programmierungsmittel auswählbar ist.

5. Kaffeeautomat nach einem der Ansprüche 1 bis 4, **dadurch gekennzeichnet, dass** die Mittel (16) zum Erfassen des Mengenparameters einen Mehlfüllstand in dem einen konstanten Behälterquerschnitt aufweisenden Erfassungsbehälter detektieren.

6. Kaffeeautomat nach Anspruch 5, **dadurch gekennzeichnet, dass** die Mehlfüllstands-Erfassungsmittel dem Erfassungsbehälter zugeordnete mechanische Abtastmittel und/oder optische Sensormittel aufweisen.

7. Kaffeeautomat nach Anspruch 5 oder 6, **dadurch gekennzeichnet, dass** der Erfassungsbehälter durch einen Bereich oder Abschnitt, insbesondere Einlassbereich, der Brüheinheit (18) realisiert ist.

8. Kaffeeautomat nach einem der Ansprüche 1 bis 7, **dadurch gekennzeichnet, dass** die Dosiermittel die mittels einer Antriebseinheit beweg- und positionierbare Dosierkammer bevorzugt konstanten Kammervolumens aufweisen
und die Bohneneintragungsmenge in die Dosierkammer durch einen vom Dosiersteuersignal vorgegebenen Bewegungshub relativ zu einem Bohneneinlass aus dem Bohnenbehälter bestimmt ist.

9. Kaffeeautomat nach einem der Ansprüche 1 bis 8, **dadurch gekennzeichnet, dass** der Dosierkammer ein als Reaktion auf das Dosiersteuersignal bewegbarer Boden- oder Wandabschnitt zugeordnet ist.

10. Kaffeeautomat nach einem der Ansprüche 1 bis 9, **dadurch gekennzeichnet, dass** der Dosierkammer zum Bestimmen der Bohneneintragungsmenge ansteuerbare, eingangs- und/oder ausgangsseitige Verschlussmittel zugeordnet sind.

11. Kaffeeautomat nach einem der Ansprüche 1 bis 10, **gekennzeichnet durch** eine Mehrzahl von Bohnenbehältern (10a, 10b), aus denen selektiv jeweils eine Bohnen-Eintragsmenge in die gemeinsame Mahleinheit eingetragen wird, wobei der Mehrzahl der Eintragungsmengen jeweils ein Vorgabesignal (21 a, 21 b) zugeordnet ist.

12. Verfahren zum Betreiben eines Kaffeeautomaten, insbesondere Kaffeeautomaten nach einem der Ansprüche 1 bis 11, **gekennzeichnet durch** die Schritte:
- Eintragen einer ersten Bohneneintragungsmenge aus einem Bohnenbehälter in eine Mahleinheit,
- Erfassen eines Mengenparameters in Form eines Mehlvolumens der von der Mahleinheit gemahlenen Bohneneintragungsmenge in einem Erfassungsbehälter und Erzeugen eines Erfassungssignals daraus,
- Vergleichen des Erfassungssignals mit einem Vorgabesignal und
- Verändern einer zweiten, der ersten Bohneneintragungsmenge nachfolgenden Bohneneintragungsmenge für die Mahleinheit, wenn ein Ergebnis des Vergleichs einen vorbestimmten Schwellwert übersteigt,
und wobei das Verändern der Bohneneintragungsmenge durch gesteuertes Antreiben einer der Mahleinheit vorgeschalteten Dosierkammer oder eines ein Dosiervolumen der Dosierkammer beeinflussenden Aggregats erfolgt.

## Claims

1. Coffee machine, having
at least one bean container (10; 10a, 10b),
a grinding unit (14) formed of the at least one bean container for grinding beans, a brewing unit (18) for ground beans disposed downstream the grinding unit, and dosing means (12) for introducing beans from the bean container into the grinding unit, wherein the grinding unit has means (16) arranged downstream for detecting a quantity parameter of the ground beans in the form of a flour volume in a detection container as well as for generating a detection signal (17) therefrom,
**characterized in that**
the dosing means (12), which are provided with a dosing chamber for introducing a bean introduction quantity into the grinding unit that is variable in response to a dosing control signal (19), can be controlled and are designed in such a way that for changing the bean introduction quantity, the dosing chamber is moved by a movement to be driven relative to an inlet so as to change location and/or the quantity of the beans to be introduced is set by moving volume-relevant parts of the dosing chamber,
and wherein the coffee machine comprises control means (20) which are configured for comparing the detection signal (17) from a first bean introduction quantity, dosed by the dosing means, to a preset signal (21; 21 a, 21 b) as well as for producing the dosage control signal (19) for a second bean introduction quantity to be dosed thereafter in response to the comparison.

2. Coffee machine according to claim 1, **characterized in that** the control means are designed in such a way that a signal difference between the detection signal and the preset signal effects a preferably proportional increase or decrease of the bean introduction quantity by the dosing means, whereby in particular the signal difference for the second bean introduction quantity is reduced.

3. Coffee machine according to claim 1 or 2, **characterized in that** the control means are designed in such a way that by producing the variable dosage control signal for successive bean introduction quantities, a regulation to a quantity parameter, which is constant within a predefined region, is effected.

4. Coffee machine according to one of claims 1 to 3, **characterized in that** the preset signal (21; 21 a, 21 b) is variable in response to a manual or program-related interaction, in particular is selectable from a multitude of stored, different and stepwise signals by a manual actuation of selection means and/or by programming means.

5. Coffee machine according to one of claims 1 to 4, **characterized in that** the means (16) for detecting the quantity parameter detect a flour filling level in the detection container, which has a constant container cross-section.

6. Coffee machine according to claim 5, **characterized in that** the flour filling level detection means comprise mechanic scanning means and/or optical sensor means, which are assigned to the detection container.

7. Coffee machine according to claim 5 or 6, **characterized in that** the detection container is realized by an area or a section, in particular inlet area, of the brewing unit (18).

8. Coffee machine according to one of claims 1 to 7, **characterized in that** the dosing means, which comprise a dosing chamber positionable and moveable by means of a drive unit and of preferably constant chamber volume, and the bean introduction quantity into the dosing chamber is determined by a movement stroke, determined by the dosage control signal, relative to a bean inlet from the bean container.

9. Coffee machine according to one of claims 1 to 8, **characterized in that** a bottom- or wall section moveable in response to the dosage control signal is assigned to the dosing chamber.

10. Coffee machine according to one of claims 1 to 9, **characterized in that** the dosing chamber is assigned controllable, inlet-side and/or outlet-side closing means for determining the bean introduction quantity.

11. Coffee machine according to one of claims 1 to 10, **characterized by** a multitude of bean containers (10a, 10b), from which is in each case selectively introduced a bean introduction quantity into the common grinding unit, wherein in each case one preset signal (21 a, 21 b) is assigned to the multitude of introduction quantities.

12. Method for operating a coffee machine, in particular a coffee machine according to one of claims 1 to 11, **characterized by** the steps of:
- Introducing a first bean introduction quantity from a bean container into a grinding unit,
- Detecting a quantity parameter in the form of a flour volume of the bean introduction quantity ground by the grinding unit in a detection container, and producing a detection signal therefrom,
- Comparing the detection signal to a preset signal, and
- Changing a second bean introduction quantity following the first bean introduction quantity for the grinding unit, if a result of the comparison exceeds a predetermined threshold value,
and wherein the change of the bean introduction quantity is effected by controlled actuation of a dosing chamber upstream the grinding unit or an aggregate impacting the dosage volume of the dosing chamber.

## Revendications

1. Machine à café comprenant au moins un réservoir à grains (10 ; 10a, 10b), une unité de mouture (14) réalisée pour moudre des grains provenant de l'au moins un réservoir à grains, une unité d'infusion (18) montée en aval de l'unité de mouture pour les grains moulus et des moyens de dosage (12) pour introduire des grains provenant du réservoir à grains dans l'unité de mouture, l'unité de mouture présentant des moyens (16) pour détecter un paramètre quantitatif des grains moulus sous la forme d'un volume de mouture dans un récipient de détection ainsi que pour générer un signal de détection (17) à partir de celui-ci étant montés en aval, **caractérisée en ce que** les moyens de dosage (12), pourvus d'une chambre de dosage, peuvent être commandés et sont réalisés pour introduire dans l'unité de mouture une quantité d'introduction de grains pouvant être modifiée en réponse à un signal de commande de dosage (19) de telle sorte que pour faire varier la quantité d'introduction de grains, la chambre de dosage est déplacée de manière variable par un déplacement devant être entraîné par rapport à une entrée et/ou la quantité des grains à introduire est ajustée par un déplacement de parties associées au volume de la chambre de dosage,
et la machine à café présentant des moyens de commande (20) qui sont réalisés pour comparer le signal de détection (17) provenant d'une première quantité d'introduction de grains dosée par les moyens de dosage (12) avec un signal de consigne (21 ; 21a, 21b) et pour générer le signal de commande de dosage (19) pour une deuxième quantité d'introduction de grains à doser subséquemment en réponse à la comparaison.

2. Machine à café selon la revendication 1, **caractérisée en ce que** les moyens de commande sont réalisés de telle sorte qu'une différence de signal entre le signal de détection et le signal de consigne provoque une augmentation ou une réduction de préférence proportionnelle de la quantité d'introduction de grains par les moyens de dosage, de sorte que la différence de signal soit notamment réduite pour la deuxième quantité d'introduction de grains.

3. Machine à café selon la revendication 1 ou 2, **caractérisée en ce que** les moyens de commande sont réalisés de telle sorte qu'un réglage à un paramètre quantitatif constant à l'intérieur d'une plage prédéterminée des grains moulus soit produit par la génération du signal de commande de dosage variable pour des quantités d'introduction de grains successives.

4. Machine à café selon l'une quelconque des revendications 1 à 3, **caractérisée en ce que** le signal de consigne (21 ; 21a, 21b) peut être modifié en réponse à une intervention manuelle ou programmée, en particulier peut être sélectionné à partir d'une pluralité de signaux mémorisés, différents et échelonnés, par un actionnement manuel de moyens de sélection et/ou par des moyens de programmation.

5. Machine à café selon l'une quelconque des revendications 1 à 4, **caractérisée en ce que** les moyens (16) pour détecter le paramètre quantitatif détectent un niveau de remplissage de mouture dans le récipient de détection présentant une section transversale de récipient constante.

6. Machine à café selon la revendication 5, **caractérisée en ce que** les moyens de détection du niveau de remplissage de mouture présentent des moyens de balayage mécaniques et/ou des moyens de capteurs optiques associés au récipient de détection.

7. Machine à café selon la revendication 5 ou 6, **caractérisée en ce que** le récipient de détection est réalisé par une région ou une portion, en particulier une région d'entrée, de l'unité d'infusion (18).

8. Machine à café selon l'une quelconque des revendications 1 à 7, **caractérisée en ce que** les moyens de dosage comprennent la chambre de dosage, de préférence de volume de chambre constant, pouvant être déplacée et positionnée au moyen d'une unité d'entraînement, et la quantité d'introduction de grains dans la chambre de dosage est déterminée par une course de déplacement prédéfinie par le signal de commande de dosage par rapport à une entrée de grains provenant du réservoir à grains.

9. Machine à café selon l'une quelconque des revendications 1 à 8, **caractérisée en ce qu'**une portion de fond ou de paroi déplaçable en réponse au signal de commande de dosage est associée à la chambre de dosage.

10. Machine à café selon l'une quelconque des revendications 1 à 9, **caractérisée en ce que** des moyens de fermeture du côté de l'entrée et/ou du côté de la sortie, pouvant être commandés pour déterminer la quantité d'introduction de grains, sont associés à la chambre de dosage.

11. Machine à café selon l'une quelconque des revendications 1 à 10, **caractérisée par** une pluralité de réservoir à grains (10a, 10b) hors desquels, de manière sélective, une quantité d'introduction de grains est introduite dans l'unité de mouture commune, un signal de consigne (21a, 21b) étant à chaque fois associé à la pluralité des quantités d'introduction.

12. Procédé pour le fonctionnement d'une machine à café, en particulier d'une machine à café selon l'une quelconque des revendications 1 à 11, **caractérisé par** les étapes suivantes :
- introduction d'une première quantité d'introduction de grains à partir d'un réservoir à grains dans une unité de mouture,
- détection d'un paramètre quantitatif sous la forme d'un volume de mouture de la quantité d'introduction de grains moulue par l'unité de mouture dans un récipient de détection et génération d'un signal de détection en résultat,
- comparaison du signal de détection avec un signal de consigne et
- variation d'une deuxième quantité d'introduction de grains subséquente à la première quantité d'introduction de grains pour l'unité de mouture si un résultat de la comparaison dépasse une valeur seuil prédéterminée, et
la variation de la quantité d'introduction de grains s'effectuant par entraînement commandé d'une chambre de dosage montée en amont de l'unité de mouture ou d'un groupe influençant un volume de dosage de la chambre de dosage.
